# EUROPEAN PATENT APPLICATION

(11) **EP 1 101 743 A2**
(43) Date of publication of application: **23.05.2001**
(21) Application number: 00125030.7
(22) Date of filing: 16.11.2000
(51) Int. Cl.: C03B 33/07, C03B 33/04, C03B 33/033, B65G 49/06

(54) **Method and machine for producing a flat glass article having an extensive surface covered with a layer of covering material**

(30) Priority: 19.11.1999 IT TO991019
(71) Applicant: BOTTERO S.p.A., 12010 Cuneo (IT)
(72) Inventor: Ghinamo, Paolo, 12012 Boves (IT); Margaria, Bruno, 12020 Villar San Costanzo (IT)
(74) Representative: Eccetto, Mauro

(57) **Abstract**

A method and machine whereby a flat glass article having an extensive surface covered with a layer (11c) of covering material is obtained by placing on a supporting surface (3) a sheet (11) of glass having an extensive surface covered with the covering material of the article, notching the sheet (11) of glass, and breaking off the sheet (11) before transferring it to a grinding station where the broken-off sheet is machined; the broken-off sheet being transferred to the grinding station (8) by lifting the sheet (11) off the supporting surface (3), and by a gripping member (21) engaging a surface (11a), not covered with the covering material, of the sheet (11).

## Description

The present invention relates to a method of producing a flat glass article having an extensive surface covered with a layer of covering material.

Flat glass articles covered with a layer of covering material are normally produced from a bare sheet of glass, which is first notched at a notching station, is then broken up at a breakoff station, and, after being ground at a grounding station, is partially covered with a layer of covering material deposited on an extensive surface of the ground sheet. The sheet is normally transferred from one station to another using suction cups, which grip the sheet by the top surface, i.e. the surface opposite the one resting on the supporting surface.

The above operations are made possible by the covering material not yet being deposited on the sheet being handled or on the broken-off semifinished article. The covering material, in fact, is deposited after all the mechanical operations have been completed, and using jigs which leave certain portions, such as the peripheral edge portion of the article, uncovered by the covering material. Since the covering material is deposited on the article when it is practically finished in terms of shape and size, special-purpose jigs, i.e. one for each article produced, are obviously required, and each of which must be positioned extremely accurately on the relative article and, once the covering material is deposited, must be removed without affecting the cover layer-which, in most cases, is extremely delicate - and without breaking the sheet when this is particularly thin, e.g. about two millimeters, as in the case of automotive glazing.

Moreover, using the current method, any change in production is a long, painstaking job, which involves changing all the fixtures and setting up the machine accordingly. As a result, currently produced covered glass articles are extremely expensive, are difficult to produce, and, in some cases, differ one from another at least as regards the cover layer.

It is an object of the present invention to provide a straightforward, low-cost method of producing flat glass articles having an extensive surface covered with a layer of covering material, designed to eliminate the aforementioned drawbacks.

According to the present invention, there is provided a method of producing a flat glass article having an extensive surface covered with a layer of covering material; the method comprising the steps of placing a sheet of glass on a supporting surface, notching said sheet, breaking a semifinished article off said sheet, and transferring said semifinished article to a work station where the semifinished article is subjected to at least one machining operation; the method being characterized in that said semifinished article is obtained by placing on said supporting surface a sheet of glass having an extensive surface covered with said layer of covering material; and in that said transfer comprises the operations of lifting the semifinished article off said supporting surface by at least a first portion, not covered with said covering material, of said semifinished article; and of a gripping member positively engaging a second portion, not covered with said covering material, of said semifinished article.

The present invention also relates to a machine for producing a flat glass article.

According to the present invention, there is provided a machine for producing a flat glass article having an extensive surface covered with a layer of covering material; the machine comprising a supporting surface for supporting a sheet of glass having an extensive surface covered with said covering material; notching means for notching said covered sheet; breakoff means for breaking a covered semifinished article off said sheet; a work station where the semifinished article is subjected to at least one machining operation; and transfer means for transferring said semifinished article to said work station; characterized in that said transfer means comprise lifting means for lifting the semifinished article off said supporting surface; said lifting means acting on at least a first portion, not covered with said covering material, of said semifinished article, and comprising a gripping member for positively engaging a second portion, not covered with said covering material, of said semifinished article.

A non-limiting embodiment of the invention will be described by way of example with reference to the accompanying drawings, in which:
Figures 1 to 4 show schematic side views of a preferred embodiment of the machine according to the invention in four different operating positions;
Figure 5 shows a top plan view, with parts removed for clarity, of a detail of the Figure 1-4 machine;
Figure 6 shows a larger-scale side view, with parts removed for clarity, of a further detail of the Figure 1-4 machine.

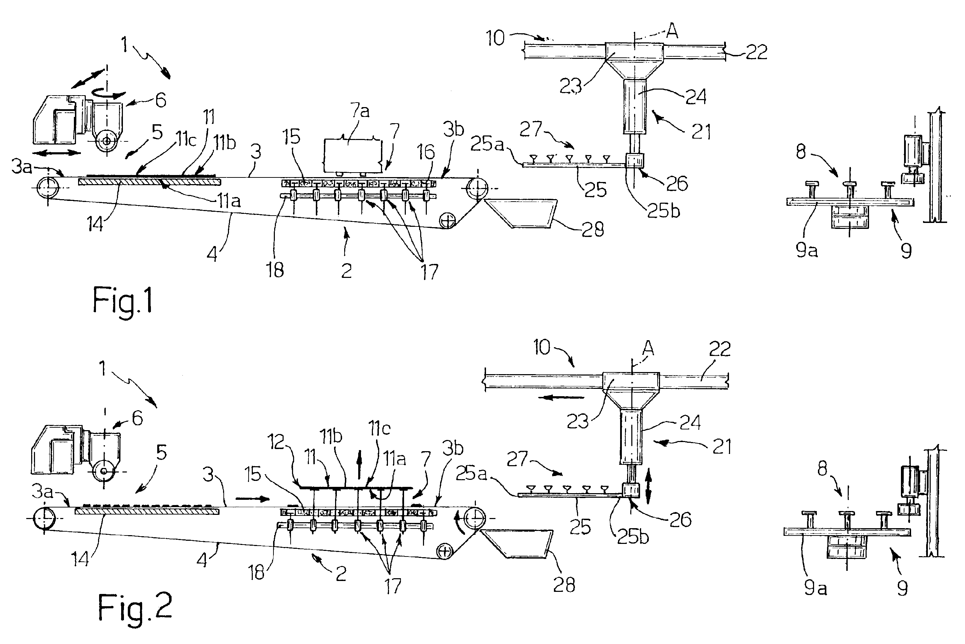

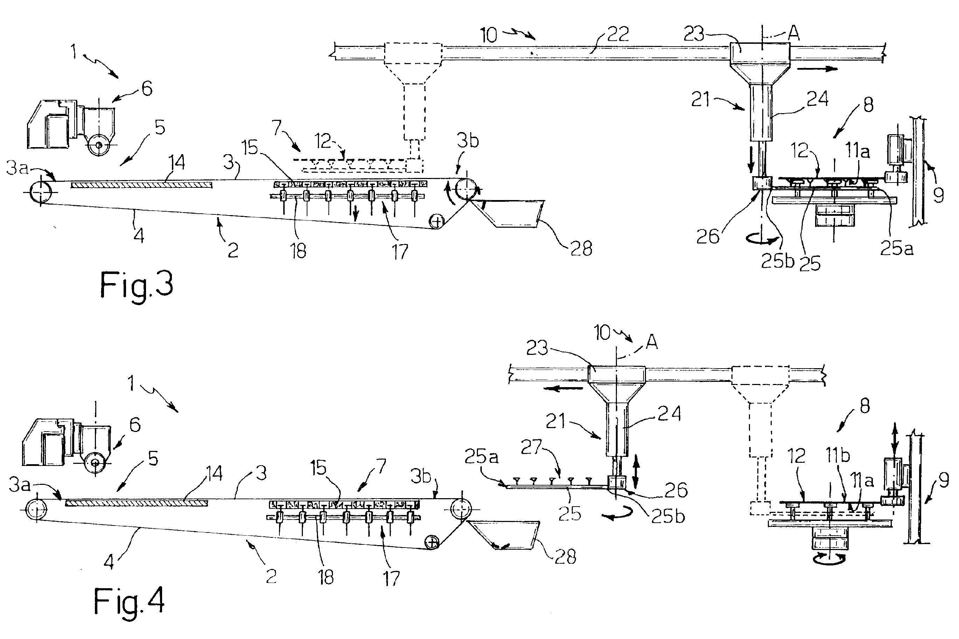

Number 1 in Figures 1 to 4 indicates as a whole a machine for producing glass articles, in particular for automotive glazing, having an extensive surface covered with a layer of covering material, e.g. of the type commonly referred to as "Low-E".

Machine 1 comprises a conveyor belt 2 in turn comprising a conveying branch 3 and a return branch 4. Conveying branch 3 comprises a portion 3a extending through a notching station 5 beneath a known notching device 6; and an opposite portion 3b extending through a breakoff station 7 housing a known breakoff device 7a not described in detail.

With reference to Figures 1 to 4, machine 1 also comprises a grinding station 8 housing a known grinding device 9 and comprising a table 9a for supporting and retaining the part for grinding; and a transfer device 10 movable between breakoff station 7 and grinding station 8.

Conveying branch 3 of belt 2 defines a supporting surface for a sheet of glass 11, a bottom surface 11a of which rests on conveying branch 3, and a top surface 11b of which is covered with a layer 11c of known covering material.

In addition to notching device 6, notching station 5 also houses a rigid, flat supporting body 14 located beneath portion 3a of conveying branch 3 to define a rigid supporting surface for portion 3a.

Breakoff station 7, on the other hand, houses a flat, elastically deformable body 15 located beneath portion 3b of conveying branch 3 to define a flexible support for portion 3b when breaking up sheet 11.

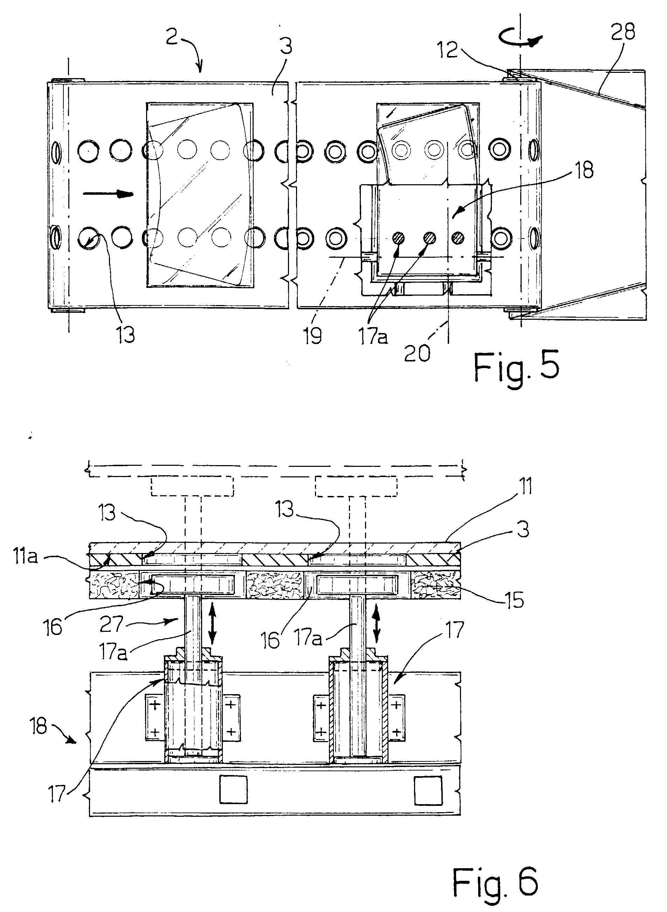

With reference to Figures 1 to 4, breakoff station 7 also houses a number of pneumatic linear actuators 17 located beneath flexible body 15 and having respective vertical rods 17a, each of which extends through two holes 13 and 16, formed coaxially through conveying branch 3 and body 15 respectively, so as to directly contact the sheet in station 7 and lift the sheet off conveying branch 3 (Figure 6).

In the example described, linear actuators 17 are connected to a fixed structure by a known adjusting assembly 18 (not described in detail) by which to adjust rods 17a with respect to body 15 in a horizontal plane and in two perpendicular directions 19 and 20 (Figure 5) and so position rods 17a coaxial with respective holes 13 and 16.

With reference to Figures 1 to 4, transfer device 10 comprises a movable gripping member 21; and an overhead guide 22 for guiding member 21 and extending between breakoff station 7 and grinding station 8. Gripping member 21 comprises a slide 23 running along overhead guide 22; a telescopic arm 24 extending downwards from slide 23 and coaxial with a vertical axis A; and an engaging member 25 projecting horizontally from the bottom end of arm 24. More specifically, engaging member 25 has a free end 25a; an end 25b hinged to a free end portion 26 of arm 24 to rotate in opposite directions about axis A and with respect to slide 23; and a number of upward-facing suction cups 27 for engaging surface lla of the broken-off sheet in station 7.

Operation of machine 1 will now be described as of the Figure 1 condition, in which the sheet 11 of glass covered with covering layer 11c is located at station 5 with surface 11a resting on conveying branch 3.

As of the above condition, notching device 6 is operated to form, in known manner on the covered sheet 11 of glass, a number of notch lines defining the article to be produced. Once notched, sheet 11 is left on branch 3, is fed by conveyor belt 2 onto body 15 at breakoff station 7 (Figure 2), and is broken along the notch lines to obtain a semifinished article 12 similar in shape to the article being produced. Breakoff completed, branch 3 is maintained stationary, linear actuators 17 are operated, and respective rods 17a are fed through respective holes 13 and 16 towards semifinished article 12 so as to lift semifinished article 12 off branch 3 as shown in Figure 2. At this point, transfer device 10, in a standby position between stations 7 and 8, is fed towards station 7 by running slide 23 along overhead guide 22, and engaging member 25 is first adjusted in height by adjusting the length of telescopic arm 24, and is then inserted between conveying branch 3 and semifinished article 12. Once inserted, and with linear actuators 17 still supporting semifinished article 12, engaging member 25 is raised so that suction cups 27 engage bottom surface 11a of semifinished article 12. On gripping semifinished article 12, engaging member 25 is raised further to detach semifinished article 12 from rods 17a of actuators 17, and is then moved towards station 8; in the course of which movement, member 21 is rotated about axis A and, on reaching station 8, is adjusted in height to deposit semifinished article 12 onto table 9a.

At this point, semifinished article 12 is retained by table 9a and machined by device 9, while actuators 17 are restored to their original position beneath body 15, and branch 3 is moved forward to feed the waste glass to a collecting station 28 and to feed another covered sheet 11 into notching station 5.

At the end of the grinding operation, transfer device 10, or another transfer device similar to or different from device 10, picks up and feeds the finished article to an unloading station (not shown).

The method and machine 1 according to the invention therefore provide for producing flat glass articles with respective extensive surfaces covered with respective layers of covering material from sheets of glass having extensive surfaces already covered with layers of covering material, and therefore with no need to deposit the covering material after machining, as with known methods. In other words, the possibility of starting with a covered sheet and of handling the sheet without affecting the cover layer provides, above all, for using any sort of covering material, including highly delicate materials which on no account must come into contact with external bodies, including the operator's hands, as well as for eliminating the need for special-purpose jigs or fixtures, as in known applications. As compared with known solutions, the method according to the invention therefore provides for greatly reducing manufacturing cost, for obtaining articles of identical characteristics in terms of not only size but also the cover layer, and, in particular, for enabling fast production changes with no tooling changes and therefore at much lower cost.

Bodies 14 and 15 in respective stations 5 and 7 provide for working very thin, in particular roughly one-millimeter-thick, sheets of glass, and so meeting increasing demand for straightforward, low-cost production of very thin covered glass articles. That is, body 14 ensures rigid support for notching sheets of any thickness, while body 15, by being flexible, greatly simplified breakoff along the notch lines, regardless of the thickness of the sheet of glass.

As compared with known solutions, using a conveyor belt provides for greatly increasing the precision of the semifinished, and therefore also of the finished, article by ensuring no change in the relative position of the belt and sheet, even during transfer from one station to the other.

Clearly, changes may be made to machine 1 as described herein without, however, departing from the scope of the accompanying Claims.

For example, conveyor belt 2 may be replaced by a number of side by side belts, in which case, adjusting assembly 18 may be dispensed with; linear actuators 17 may be replaced by a single not necessarily linear or pneumatic actuator; and transfer devices other than those described may be used to transfer the semifinished article to station 8 or between stations 5 and 7.

## Claims

1. A method of producing a flat glass article having an extensive surface covered with a layer (11c) of covering material; the method comprising the steps of placing a sheet (11) of glass on a supporting surface (3), notching said sheet (11), breaking a semifinished article (12) off said sheet (11), and transferring said semifinished article (12) to a work station (8) where the semifinished article (12) is subjected to at least one machining operation; the method being characterized in that said semifinished article (12) is obtained by placing on said supporting surface (3) a sheet of glass having an extensive surface covered with said layer (11c) of covering material; and in that said transfer comprises the operations of lifting the semifinished article (12) off said supporting surface (3) by at least a first portion (11a), not covered with said covering material, of said semifinished article (12); and of a gripping member (21) positively engaging a second portion (11a), not covered with said covering material, of said semifinished article (12).

2. A method as claimed in Claim 1, characterized in that said gripping member (21) engages said semifinished article (12) by inserting an engaging member (25) of said gripping member (21) between said supporting surface (3) and the semifinished article (12), and by the engaging member (25) engaging said second portion (11a).

3. A method as claimed in Claim 2, characterized in that said second portion is positioned contacting said supporting surface (3) during said notching and breakoff steps.

4. A method as claimed in Claim 2 or 3, characterized in that the operation of said gripping member (21) engaging said sheet (11) comprises an operation of attaching said engaging member (25) to said second portion by means of suction cup means (27) carried by said engaging member (25).

5. A method as claimed in any one of the foregoing Claims, characterized in that said transfer comprises rotation of said engaging member (25) about a substantially vertical axis (A).

6. A method as claimed in any one of the foregoing Claims, characterized in that the lifting of said semifinished article (12) is effected through said supporting surface (3).

7. A method as claimed in Claim 6, characterized in that said semifinished article is lifted by moving the rods (17a) of a number of linear actuators (17) through said supporting surface (3) in a direction substantially perpendicular to the supporting surface (3).

8. A machine (1) for producing a flat glass article having an extensive surface covered with a layer (11c) of covering material; the machine (1) comprising a supporting surface (3) for supporting a sheet (11) of glass having an extensive surface covered with said covering material; notching means (6) for notching said covered sheet (11); breakoff means (7a) for breaking a covered semifinished article (12) off said sheet (11); a work station (8) where the semifinished article is subjected to at least one machining operation; and transfer means (10) for transferring said semifinished article (12) to said work station (8); characterized in that said transfer means comprise lifting means (17) for lifting the semifinished article (12) off said supporting surface (3); said lifting means (17) acting on at least a first portion (11a), not covered with said covering material, of said semifinished article (12), and comprising a gripping member (21) for positively engaging a second portion (11a), not covered with said covering material, of said semifinished article (12).

9. A machine as claimed in Claim 8, characterized in that said gripping member (21) comprises an engaging member (25) which is inserted, in use, between said supporting surface (3) and said semifinished article (12).

10. A machine as claimed in Claim 9, characterized in that said engaging member (25) comprises suction cup means (27) for engaging a surface, facing said supporting surface (3), of said semifinished article (12).

11. A machine as claimed in any one of Claims 8 to 10, characterized in that said lifting means comprise a number of linear actuators (17) comprising respective actuating rods (17a) extending through said supporting surface and acting directly on said semifinished article (12).

12. A machine as claimed in any one of Claims 8 to 11, characterized by comprising a notching station (5) and a breakoff station (7) located a given distance apart, and a conveyor belt (2) for feeding said notched sheet to said breakoff station (7); said conveyor belt comprising a conveying branch (3) forming part of said supporting surface.

13. A machine as claimed in Claim 12, characterized by also comprising rigid first supporting means (14) located beneath said conveying branch (3) at said notching station (5) to define a support for the conveying branch.

14. A machine as claimed in any one of Claims 8 to 13, characterized by also comprising flexible second supporting means (15) located beneath said conveying branch (3) at said breakoff station (7) to define a flexible support for the conveying branch.
